# EUROPÄISCHE PATENTSCHRIFT

(11) **EP 3 704 776 B1**
(45) Veröffentlichungstag und Bekanntmachung des Hinweises auf die Patenterteilung: **12.10.2022**
(21) Anmeldenummer: 18795375.7
(22) Anmeldetag: 22.10.2018
(51) Int. Cl.: H02H 3/04, H02H 11/00

(54) **VERPOLSCHUTZANORDNUNG, VERFAHREN ZUM BETRIEB DER VERPOLSCHUTZANORDNUNG UND KORRESPONDIERENDE VERWENDUNG**
POLARITY-REVERSAL PROTECTION ARRANGEMENT, METHOD FOR OPERATING THE POLARITY-REVERSAL PROTECTION ARRANGEMENT AND CORRESPONDING USE
CIRCUIT DE PROTECTION CONTRE L'INVERSION DE POLARITÉ, PROCÉDÉ DE FONCTIONNEMENT DU CIRCUIT DE PROTECTION CONTRE L'INVERSION DE POLARITÉ ET UTILISATION CORRESPONDANTE

(30) Priorität: 03.11.2017 DE 102017219551
(43) Veröffentlichungstag der Anmeldung: 09.09.2020
(73) Patentinhaber: Continental Automotive Technologies GmbH, 30165 Hannover (DE)
(72) Erfinder: FAHLBUSCH, Thorsten, 65934 Frankfurt am Main (DE)
(74) Vertreter: Continental Corporation
(86) Internationale Anmeldenummer: PCT/EP2018/078868
(87) Internationale Veröffentlichungsnummer: WO 2019/086285

(56) Entgegenhaltungen:
- WO-A1-98/13922
- WO-A1-2014/205974
- US-A1- 2005 007 711
- US-B1- 9 054 517

## Beschreibung

Die Erfindung betrifft eine Verpolschutzanordnung gemäß dem Oberbegriff des Anspruch 1, ein Verfahren zum Betrieb der Verpolschutzarnodnung nach Anspruch 6 sowie eine Verwendung der Verpolschutzanordnung nach Anspruch 9.

US2005007711A1 zeigt einen integrierten Schaltkreis (IC), mit einem Überspannungs-, Unterspannungs- und Verpolschutz, um zu verhindern, dass das elektronische System durch einen Wechselstromadapter mit einem falschen Spannungsbereich oder einer falschen Spannungspolarität beschädigt wird.

Aus dem Stand der Technik sind zudem Steuergeräte für Kraftfahrzeuge bekannt, bei denen ein Rückfluss von Energie in das Bordnetz verhindert wird, um die Sicherheit des Fahrzeugs nicht zu gefährden. Dafür wird ein Transistor eingesetzt, welcher den Rückfluss an einem Knotenpunkt zum Bordnetz nicht zulässt und die Elektronik des Steuergeräts vor negativen Spannungen (Verpolschutzfunktion) schützt.

Im sog. Linearmodus wird der Transistor (insbesondere FET) derart angesteuert, dass er sich wie eine Ideale Diode verhält. Beim Fluss aus dem Bordnetz kommend werden alle bekannten Störpulse weggefiltert, indem die Verbindung zu den Lastkreisen der ECU innerhalb sehr kurzer Zeit getrennt wird. Der Transistor wird über eine Regelschleife (linear regulation loop) kontrolliert, so dass eine bestimmte Drain-Source-Spannung am Transistor entsteht. Diese bestimmte Spannung bewegt sich im Bereich einer Schwellenspannung des Transistors, damit der Transistor schnell von einem angeschalteten Zustand in einen ausgeschalteten Zustand wechseln kann und umgekehrt.

Im sog. Schaltermodus steuert eine Schaltung das Gate des Transistors, wobei die Schaltung einen Schalter umfasst. Ist der Schalter geschlossen, so wird der Transistor aktiviert und der Drain-Source-Widerstand wird mit einem Minimalwert belegt. Ist der Schalter geöffnet, so ist der Transistor deaktiviert und die Gate-Source-Spannung des Transistors wird unter die Schwellenspannung gebracht. Der Schaltung des Schaltermodus ist bekannterweise eine Überwachungsschaltung beigefügt, welche die ordnungsgemäße Funktion der Schaltung überwacht.

Der Nachteil der Anwendungen gemäß dem Stand der Technik sind folgende:
- Es ist keine Kombination der beiden Modi möglich.
- Es ist keine kontrollierte Rückspeisung in das Bordnetz möglich.
- Es gibt keine Selbsttest-/Diagnosefunktion im Linearmodus.
- Es werden diskrete Komponenten auf der Leiterplatte innerhalb des Steuergeräts eingesetzt.

Die Aufgabe der Erfindung ist es daher, die o.g. Nachteile zu vermeiden und eine verbesserte Verpolschutzanordnung bereitzustellen.

Die Aufgabe wird gelöst durch die unabhängigen Ansprüche.

Gemäß der Erfindung wird eine Verpolschutzanordnung vorgeschlagen, welche eine Transistorschaltung, eine Verstärkerschaltung und eine Ausgangstreiberstufe aufweist. Dabei ist die Verstärkerstufe mit der Ausgangstreiberstufe verbunden und die Ausgangstreiberstufe ist mit der Transistorschaltung verbunden. Weiterhin weist die Verpolschutzschaltung einen ersten Anschlussknoten und einen zweiten Anschlussknoten auf, welche über die Transistorschaltung miteinander verbunden sind. Der erste Anschlussknoten stellt bevorzugt den Anschluss zu einem Bordnetz (sog. KL30 Klemme) her und der zweite Anschlussknoten bevorzugt den Anschluss zu einem oder mehreren Steuergeräten (sog. KL30B Klemme). Mittels der Transistorschaltung ist eine elektrische Verbindung zwischen dem ersten Anschlussknoten und dem zweiten Anschlussknoten herstellbar oder trennbar. Ferner ist die Ausgangstreiberstufe als Tri-State Stufe ausgebildet.

Die Verstärkerschaltung ist erfindungsgemäß dazu ausgebildet, den zuvor erwähnten Linearmodus auszuführen, bei dem der Transistor derart angesteuert wird, dass er sich wie eine ideale Diode verhält. Der erste Anschlussknoten ist bevorzugt mit dem Bordnetz des Fahrzeugs verbunden.

Als Tri-State Stufe wird im vorliegenden Fall eine Schaltung bezeichnet, welche es ermöglicht, einen hochohmigen Zustand anzunehmen. Dadurch kann vorteilhaft eine weitere Schaltung an einen dritten Anschlussknoten zwischen die Ausgangstreiberstufe und Transistorschaltung angeschlossen werden, welche die Transistorschaltung über seinen Gateanschluss kontrollieren kann. Die Ausangstreiberstufe wird die Operation der weiteren Schaltung dabei nicht beeinflussen oder stören. Besonders bevorzugt ist diese weitere Schaltung als Überwachungsschaltung und/oder als Switchschaltung ausgebildet. Im Fall einer Switchschaltung ist es insbesondere möglich, den genannten Switchmodus durchzuführen. Bevorzugt ist die Transistorschaltung über die Ausgangstreiberstufe von der Verstärkerschaltung und der Switchschaltung ansteuerbar. Besonders bevorzugt wird die Transistorschaltung zu bestimmten Zeitpunkten über die Ausgangstreiberstufe jeweils entweder von der Verstärkerschaltung oder der Switchschaltung angesteuert.

In einer bevorzugten Weiterbildung kann die Ausbildung als "Tri-State Stufe" bedeuten, dass die Ausgangstreiberstufe als jedwede Verstärkerstufe mit Möglichkeit für einen Tri-State-Modus ausgebildet sein kann; beispielsweise als Gegentaktstufe (push-pull-stage) mit einem Tri-State-Modus.

Durch die Erfindung ist es vorteilhaft möglich, beide Modi bereitzustellen und nutzbar zu machen. Ganz besonders bevorzugt werden die beiden Modi im Wechsel betrieben, so dass eine dosierte Rückspeisung von Energie in das Bordnetz durchgeführt wird. Durch eine dosierte Rückspeisung kann unter Beachtung von vorgegebenen Grenzen zu jedem Zeitpunkt ein bestimmtes Sicherheitslevel des Steuergeräts bzw. des Fahrzeugs gewährleistet werden. Damit können die thermischen Verluste innerhalb des Steuergeräts verringert werden, was ein kompakteres und robusteres Produktdesign ermöglicht.

Ein weiterer Vorteil der Erfindung ist, dass die Pins am IC-Gehäuse eines ASIC geteilt genutzt werden können. Es werden durch die vorgeschlagene Verschaltung insbesondere weniger Pins zum Anschluss benötigt, wodurch an dieser Stelle Platz und Ressourcen gespart werden können.

In einer bevorzugten Weiterbildung der Erfindung ist in der Verbindung zwischen der Verstärkerschaltung und der Ausgangstreiberstufe ein Knotenpunkt angeordnet und die Verpolschutzanordnung weist einen Widerstand auf, welcher mit dem Knotenpunkt und einem der Anschlussknoten, insbesondere dem Anschlussknoten zum Bordnetz, verbunden ist. Der Widerstand macht die Verpolschutzanordnung widerstandsfähiger, indem er die gesamte Anordnung gegenüber "Verpolung", also ISO-Pulsen, Load Dump und jeglicher Art von destruktiven elektrischen Pulsen am Bordnetz schützt. Dies bewirkt eine verbesserte Robustheit der Anordnung gegenüber Zerstörung.

In einer bevorzugten Weiterbildung der Erfindung ist die Transistorschaltung als N-MOS-Transistor ausgebildet und die Verpolschutzanordnung weist eine Ladungspumpe (engl. charge pump) auf. Die Ladungspumpe ist mit der Ausgangstreiberstufe verbunden. Alternativ ist die Transistorschaltung als P-MOS-Transistor ausgebildet. In diesem Fall ist die Ladungspumpe entbehrlich und wird bevorzugt nicht vorgesehen.

In einer bevorzugten Weiterbildung der Erfindung weist die Verpolschutzanordnung eine Überwachungsschaltung auf, mittels welcher die Transistorschaltung, die Verstärkerschaltung und/oder die Switchschaltung überwachbar ist. Ganz besonders bevorzugt wird jedoch die Transistorschaltung überwacht.

Bevorzugt wird dabei eine Überwachungsschaltung eingesetzt, welche in einem Bauteil gemeinsam mit der Switchschaltung untergebracht ist. Bevorzugt ist es durch die Weiterbildung daher möglich, die Überwachungsschaltung nicht nur für die Überwachung der Switchschaltung einzusetzen, sondern auch für die Verstärkerschaltung. Damit sind vorteilhaft keine zusätzlichen Bauteile, wie z.B. eine weitere Überwachungsschaltung für eine Überwachung der Verstärkerschaltung notwendig. Insbesondere bevorzugt umfasst die Überwachungsschaltung eine Testfunktion und/oder eine Diagnosefunktion. Beispielsweise können die Schaltungen auf Fehler überwacht werden, z.B. im laufenden Betrieb. Es können jedoch auch vordefinierte Tests durchgeführt werden, die einen Hinweis auf Fehler in den Schaltungen geben. Besonders bevorzugt findet eine Auswertung der Daten statt, z.B. durch einen Mikroprozessor, so dass eine Fehlermeldung ausgegeben werden kann. Auf die Fehlermeldung ist mit der Diagnosefunktion zugreifbar bzw. die Funktionen der Überwachungsschaltung sind mittels der Diagnosefunktion steuerbar.

In einer bevorzugten Weiterbildung der Erfindung ist die Überwachungsschaltung derart ausgebildet, um weitere Tests bzw. Überwachungen durchzuführen, welche nicht die Transistorschaltung, die Verstärkerschaltung oder die Switchschaltung betreffen.

In einer weiteren bevorzugten Weiterbildung der Erfindung sind zumindest die Ausgangstreiberstufe und die Verstärkerschaltung auf einem ASIC (Anwendungsspezifische integrierte Schaltung) zusammen untergebracht. Besonders bevorzugt ist der ASIC als Leistungsbauteil (PCU) ausgebildet, das für das Energiemanagement einer Steuereinheit (ECU) eines Fahrzeugs geeignet ist. Der ASIC ist bevorzugt Teil der ECU. Die Transistorschaltung kann ebenfalls in dem ASIC untergebracht sein, oder - alternativ - in einem anderen Teil der ECU. Besonders bevorzugt ist auch die Switchschaltung in dem ASIC angeordnet. Insgesamt können durch eine derartige Ausbildung der Verpolschutzanordnung Kosten und Platzbedarf in der Steuereinheit reduziert werden. Zudem ist nur eine minimale Fläche auf dem Chip des ASIC notwendig. Alternativ dazu werden die Schaltungen diskret auf der Leiterplatte vorgesehen.

In einer weiteren bevorzugten Weiterbildung der Erfindung ist zumindest ein Teil der Treiberstufen (Transistoren) als Metalloxid-Transistoren (CMOS) ausgebildet. Insbesondere sind alle der Treiberstufen derart ausgebildet. Alternativ können jedoch auch beispielsweise bipolare Transistoren verwendet werden oder jede andere Verstärkerschaltung, welche im abgeschalteten Zustand eine hohe Impedanz ausgibt.

In einer weiteren bevorzugten Weiterbildung der Erfindung ist die Verstärkerschaltung als Operationsverstärker, z.B. als Komparator, ausgebildet. Alternativ kann die Verstärkerschaltung auch als jede andere differentielle Struktur zur Signalverarbeitung und Signalverstärkung genutzt werden.

Die Erfindung betrifft weiterhin ein Verfahren zum Betrieb einer vorstehend beschriebenen Verpolschutzanordnung. Folgende Schritte sind gemäß des Verfahrens durchführbar:
- Ansteuern der Transistorschaltung durch die Ausgangstreiberstufe basierend auf Signalen der Verstärkerschaltung und/oder
- Ansteuern der Transistorschaltung durch die Ausgangstreiberstufe basierend auf Signalen der Switchschaltung.

In einer bevorzugten Weiterbildung des Verfahrens findet ein Wechsel zwischen einem Ansteuern der Transistorschaltung basierend auf Signalen der Verstärkerschaltung und der Switchschaltung statt. Die Ansteuerungen durch die Verstärkerschaltung und die Switchschaltung finden daher bevorzugt nie gleichzeitig statt, sondern wechseln sich gemäß gesetzter Vorgaben ab. Dadurch ist eine dosierte bzw. kontrollierte Rückspeisung von Energie in das Bordnetz möglich. In einer bevorzugten Weiterbildung des Verfahrens werden die Transistorschaltung, die Verstärkerschaltung und/oder die Switchschaltung mittels der Überwachungsschaltung überwacht.

In einer bevorzugten Weiterbildung des Verfahrens wird die Verpolschutzanordnung in einem Auskopplungsmodus betrieben, wobei zu einem bestimmten Zeitpunkt entweder die Verstärkerschaltung oder die Switchschaltung aktiv ist und dabei die Transistorschaltung ansteuert, wobei die jeweils nicht aktive Schaltung (Verstärkerschaltung oder Switchschaltung) eine hohe Impedanz am Knotenpunkt garantiert. Dafür wird die jeweilige Schaltung vom Ruhestrom getrennt. Durch diese Weiterbildung wird vermieden, dass sich beide Modi gegenseitig stören.

Zudem betrifft die Erfindung eine Verwendung der beschriebenen Verpolschutzanordnung in einer Steuereinheit für ein Fahrzeug.

Weitere bevorzugte Ausführungsformen ergeben sich aus den Ansprüchen und der nachfolgenden Beschreibung von Ausführungsbeispielen anhand von den Figuren.

In schematischer Darstellung zeigen:
- Fig. 1: eine beispielhafte Implementierung einer Verpolschutzanordnung,
- Fig. 2: eine beispielhafte erfindungsgemäße Ausbildung der Ausgangstreiberstufe,
- Fig. 3: eine weitere beispielhafte erfindungsgemäße Ausbildung der Ausgangstreiberstufe,
- Fig. 4: eine beispielhafte Ausgestaltung einer Switchschaltung,
- Fig. 5: eine beispielhafte erfindungsgemäße Ausgestaltung der Verpolschutzanordnung mit Verstärkerschaltung und Switchschaltung.

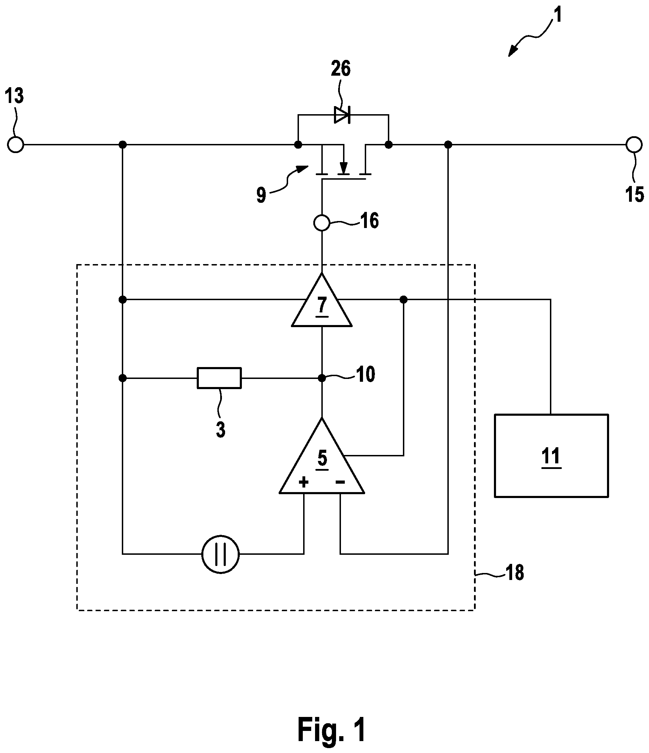

Fig. 1 zeigt eine bisherige Implementierung einer Verpolschutzanordnung 1 mit einem zusätzlichen Widerstand 3. Die Verpolschutzanordnung 1 weist eine Verstärkerschaltung 5, eine Ausgangstreiberstufe 7 und eine Transistorschaltung 9 auf. Die Transistorschaltung 9 ist bevorzugt als N-MOS-Transistor ausgebildet. Aus diesem Grund umfasst die Verpolschutzanordnung 1 ebenfalls eine Ladungspumpe 11. Alternativ kann die Transistorschaltung 9 auch als P-MOS-Transistor ausgebildet sein, wobei in diesem Fall die Ladungspumpe 11 entfallen kann. Der Widerstand 3 ist mit einem Knotenpunkt 10 und mit einem ersten Anschlussknoten 13 verbunden.

Die Verpolschutzanordnung 1 ist zwischen dem ersten Anschlussknoten 13 und einem zweiten Anschlussknoten 15 angeordnet. Insbesondere ist die Transistorschaltung 9 der Verpolschutzanordnung 1 zwischen dem ersten Anschlussknoten 13 (sog. KL30 Klemme) und dem zweiten Anschlussknoten 15 (sog. KL30B Klemme) angeordnet. Der erste Anschlussknoten 13 ist bevorzugt mit einem Bordnetz eines Fahrzeugs verbunden. Der zweite Anschlussknoten 15 steht bevorzugt in Verbindung mit Aktuatoren des Fahrzeugs und/oder der internen Spannungsversorgung des Steuergerätes. Die Transistorschaltung 9 ist insbesondere derart ausgebildet, dass sie eine Verbindung zwischen dem ersten Anschlussknoten 13 und dem zweiten Anschlussknoten 15 herstellen oder trennen kann.

Gemäß der Erfindung ist die Ausgangstreiberstufe 7 als Tri-State Stufe ausgebildet. So können an einem dritten Anschlussknoten 16 zwischen der Ausgangstreiberstufe 7 und der Transistorschaltung 9 nicht nur die Switchschaltung 23 und die Test- und Diagnoseschaltung 25 sondern auch weitere Schaltungen angeschlossen werden.

Der Zusammenschluss aus Ausgangstreiberstufe 7, Verstärkerschaltung 5 und Widerstand 3 kann als Reglerschaltung 18 bezeichnet werden. Die Ansteuerung der Transistorschaltung 9 erfolgt durch die Verstärkerschaltung 5 mittelbar über die Ausgangstreiberstufe 7 bzw. unmittelbar durch die Reglerschaltung 18. Die Ansteuerung der Transistorschaltung 9 kann ebenfalls unmittelbar durch die Switchschaltung 13 erfolgen.

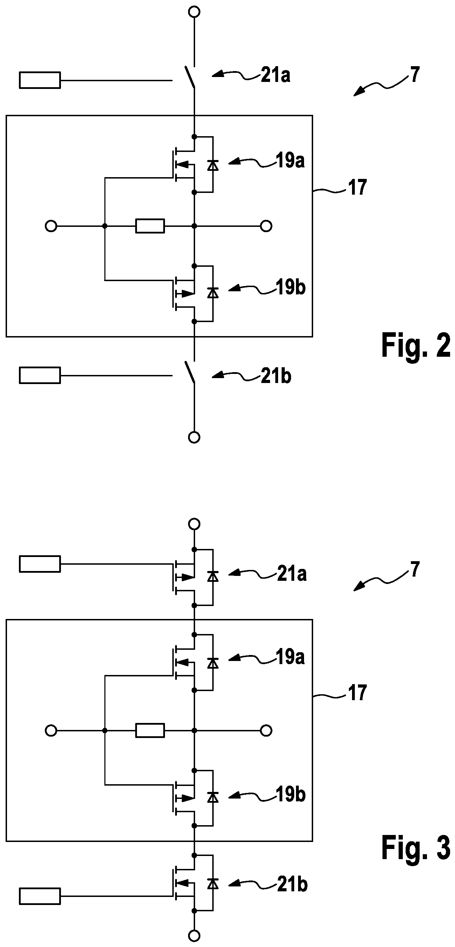

Fig. 2 zeigt eine beispielhafte Ausbildung der Ausgangstreiberstufe 7 als Tri-State Stufe. Dabei weist die Ausgangstreiberstufe 7 die eigentliche Ausgangstreiberschaltung 17 mit zwei MOSFETs 19a, b auf, sowie zusätzlich zwei Schalter 21a, b. Diese beiden Schalter 21a, b können - wie in Fig. 3 dargestellt - ebenfalls als MOSFETs ausgebildet sein.

Die Schalter 21a, b, ergeben im Zusammenspiel mit der Ausgangstreiberschaltung 17 eine Tri-State Stufe. Die Schalter 21a, b bewirken, dass der Ausgang der Ausgangstreiberstufe 7 hochohmig wird bzw. hohe Impedanzen aufweist, weshalb ein Wechsel zwischen der Ansteuerung der Transistorschaltung 9 durch die Verstärkerschaltung 5 und einer weiteren Schaltung möglich wird. Die Implementierungsoptionen für die Reglerschaltung 18 beziehen sich hier ausdrücklich nicht nur auf das Vorsehen von MOSFETs, sondern umfassen jede Art von aktiven Bauelementen, die als Schalter oder Verstärker fungieren können. Dazu gehören z.B. auch Bipolartransistoren oder Junction-FETs usw.

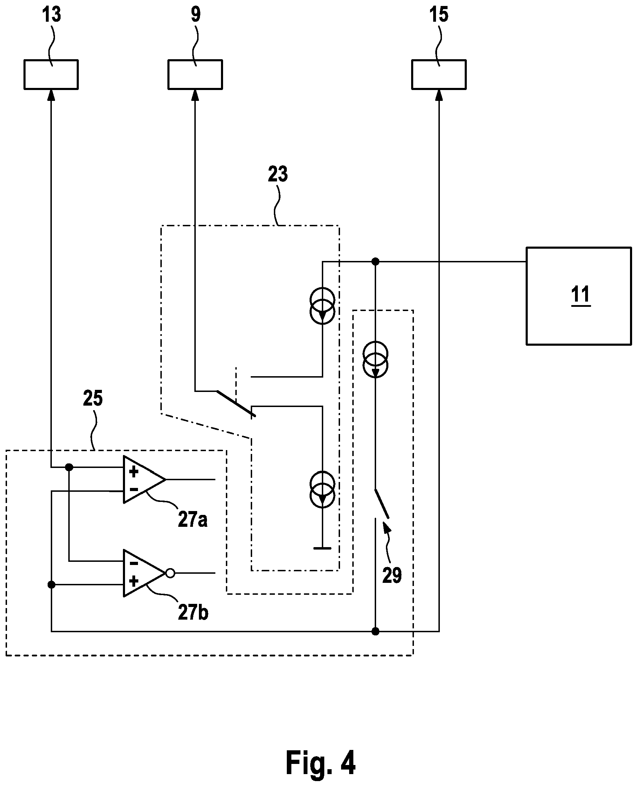

Fig. 4 zeigt eine beispielhafte Ausgestaltung einer Switchschaltung 23 (strichpunktierte Linie) und einer Überwachungsschaltung 25 (gestrichelte Linie), welche - ggf. in modifizierter Weise - als weitere Schaltungen an den dritten Anschlussknoten 16 zwischen der Ausgangstreiberstufe 7 und der Transistorschaltung 9 angeschlossen werden können. Die Verstärkerschaltung 5 bzw. die Reglerschaltung 18 und die Switchschaltung 23 sind beide dazu geeignet, die Transistorschaltung 9 in unterschiedlichen Modi anzusteuern und somit eine unterschiedlich ausgestaltete Trennung bzw. Herstellung der Verbindung zwischen dem ersten Anschlussknoten 13 und dem zweiten Anschlussknoten 15 zu bewirken.

In der Ausgestaltung von Fig. 4 ist eine herkömmliche Switchschaltung 23 gezeigt, welche bisher im Stand der Technik alleine, ohne das Vorsehen einer Reglerschaltung 18, eingesetzt wird, um die Transistorschaltung 9 anzusteuern. Daher ist diese Switchschaltung 23 sowohl mit dem ersten Anschlussknoten 13 und dem zweiten Anschlussknoten 15 als auch mit der Transistorschaltung 9 verbunden. Die Switchschaltung 23 weist eine Ladungspumpe 11 auf. Zudem ist bereits zusammen mit herkömmlichen Switchschaltungen 23 in einem gemeinsamen Bauteil die Überwachungsschaltung 25 vorgesehen, welche die ordnungsgemäße Funktionsweise der Switchschaltung 23 überwachen kann. Die Überwachungsschaltung 25 weist dafür mehrere Operationsverstärker 27a, b und einen Schalter 29 auf.

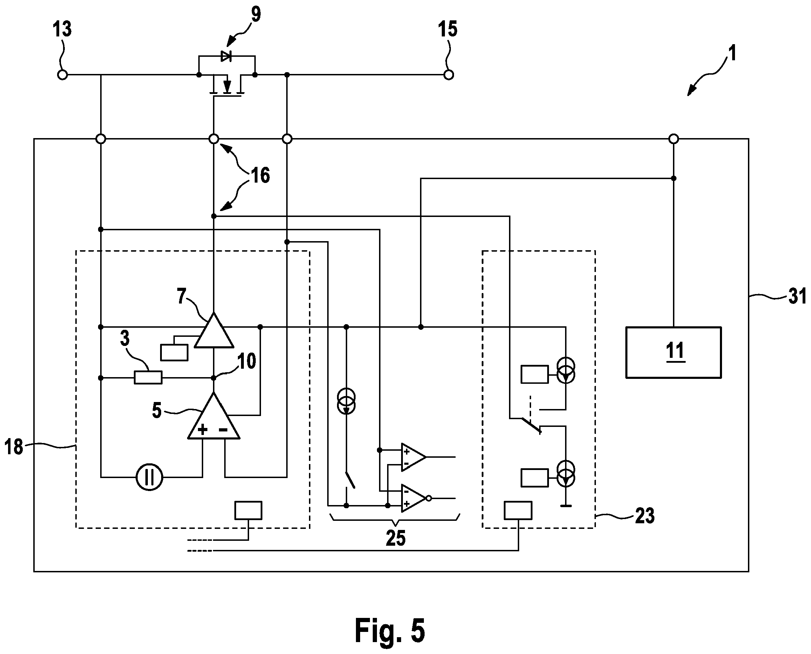

Fig. 5 zeigt eine erfindungsgemäße beispielhafte Verpolschutzanordnung 1 mit einer Verstärkerschaltung 5 und einer Switchschaltung 23, wobei die Überwachungsschaltung 25 derart verschaltet ist, dass eine Überwachung der Transistorschaltung 9, der Verstärkerschaltung 5 bzw. der Reglerschaltung 18 und der Switchschaltung 23 möglich ist.

Die Überwachungsschaltung 25 ist bevorzugt ausgebildet, um folgende Funktionen durchführbar zu machen:
a. Testfunktion, ob Transistorschaltung (9) sich ein- /ausschalten lässt und
b. Testfunktion, ob die Bulk-Diode 26 der Transistorschaltung (9) vorhanden ist.

Weitere Test und Überwachungsfunktionen sind denkbar und sie werden durch die Erfindung unterstützt oder möglich gemacht.

Alle Bauteile, die innerhalb der Umrandung 31 gezeichnet sind, sind bevorzugt in einem ASIC untergebracht, während die Transistorschaltung 9 und die beiden Anschlussknoten 13, 15 in einem anderen Teil einer Steuereinheit des Fahrzeugs angeordnet sind. Die Erfindung ist jedoch nicht auf eine derartige Anordnung innerhalb eines ASIC beschränkt, sondern sie kann auch diskret außerhalb eines ASIC aufgebaut sein.

Die Switchschaltung 23 und die Überwachungsschaltung 25 sind bevorzugt über den dritten Anschlussknoten 16 mit dem Gate der Transistorschaltung 9 verbunden, so dass sie die Funktion der Transistorschaltung 9 steuern können. Das Bezugszeichen 16 zeigt hier auf verschiedene Punkte, welche jedoch alle den dritten Anschlussknoten 16 darstellen, da überall dieselbe Spannung anliegt.

Die Verstärkerschaltung 5 bzw. Reglerschaltung 18 und die Switchschaltung 23 werden bevorzugt derart betrieben, dass sie im Wechsel die Transistorschaltung 9 ansteuern. Damit wird im Wechsel eine Trennung/ein Herstellen der Verbindung zwischen dem ersten Anschlussknoten 13 und dem zweiten Anschlussknoten 15 basierend auf den beiden verschiedenen Modi vorgenommen. Vorteilhaft ist es dadurch möglich, eine dosierte Rückspeisung von Energie in das Bordnetz vorzunehmen.

## Patentansprüche

1. Verpolschutzanordnung mit einer Transistorschaltung (9), einer Verstärkerschaltung (5) und einer Ausgangstreiberstufe (7), wobei die Verstärkerschaltung (5) mit der Ausgangstreiberstufe (7) verbunden ist und die Ausgangstreiberstufe (7) mit der Transistorschaltung (9) verbunden ist und die Transistorschaltung (9) zwischen einem ersten Anschlussknoten (13) und einem zweiten Anschlussknoten (15) der Verpolschutzanordnung (1) angeordnet ist, so dass mittels der Transistorschaltung (9) eine elektrische Verbindung zwischen dem ersten Anschlussknoten (13) und dem zweiten Anschlussknoten (15) herstellbar oder trennbar ist, wobei die Ausgangstreiberstufe (7) als Tri-State Stufe ausgebildet ist, **dadurch gekennzeichnet, dass** die Verstärkerschaltung (5) dazu ausgebildet ist, einen Linearmodus auszuführen, bei welchem die Transistorschaltung (9) derart angesteuert wird, dass sie sich wie eine ideale Diode verhält.

2. Verpolschutzanordnung nach Anspruch 1, **dadurch gekennzeichnet, dass** die Verpolschutzanordnung (1) eine Switchschaltung (23) aufweist, welche mit der Ausgangstreiberstufe (7) verbunden ist, wobei die Transistorschaltung (9) durch die Verstärkerschaltung (5) und durch die Switchschaltung (23) ansteuerbar ist.

3. Verpolschutzanordnung nach einem der vorhergehenden Ansprüche, **dadurch gekennzeichnet, dass** in der Verbindung zwischen der Verstärkerschaltung (5) und der Ausgangstreiberstufe (7) ein Knotenpunkt (10) angeordnet ist und die Verpolschutzanordnung (1) einen Widerstand (3) aufweist, welcher mit dem Knotenpunkt (10) und mit dem ersten Anschlussknoten (13) verbunden ist.

4. Verpolschutzanordnung nach einem der vorhergehenden Ansprüche, **dadurch gekennzeichnet, dass** die Transistorschaltung (9) als N-MOS-Transistor ausgebildet ist und die Verpolschutzanordnung (1) eine Ladungspumpe (11) aufweist, welche mit der Ausgangstreiberstufe (7) verbunden ist.

5. Verpolschutzanordnung nach einem der Ansprüche 2 bis 4, **dadurch gekennzeichnet, dass** die Verpolschutzanordnung (1) eine Überwachungsschaltung (25) aufweist, mittels welcher die Transistorschaltung (9), die Verstärkerschaltung (5) und/oder die Switchschaltung (23) überwachbar ist.

6. Verfahren zum Betrieb einer Verpolschutzanordnung (1) nach einem der Ansprüche 2 bis 5, **dadurch gekennzeichnet, dass** folgende Schritte durchgeführt werden:
- Ansteuern der Transistorschaltung (9) durch die Ausgangstreiberstufe (7) basierend auf Signalen der Verstärkerschaltung (5), wobei die Verstärkerschaltung (5) in einen Linearmodus ausgeführt wird, so dass die Transistorschaltung (9) derart angesteuert wird, dass sie sich wie eine ideale Diode verhält und/oder
- Ansteuern der Transistorschaltung (9) basierend auf Signalen der Switchschaltung (23).

7. Verfahren zum Betrieb nach Anspruch 6, **dadurch gekennzeichnet, dass** folgender Schritt durchgeführt wird:
- Ansteuern der Transistorschaltung (9) basierend auf einem Wechsel zwischen Signalen der Verstärkerschaltung (5) und Signalen der Switchschaltung (23).

8. Verfahren zum Betrieb nach Anspruch 6 oder 7, **dadurch gekennzeichnet, dass** die Verpolschutzanordnung (1) eine Überwachungsschaltung (25) aufweist und folgender Schritt durchgeführt wird:
- Überwachen der Transistorschaltung (9), der Verstärkerschaltung (5) und/oder der Switchschaltung (23) mittels der Überwachungsschaltung (25).

9. Verwendung einer Verpolschutzanordnung (1) nach einem der Ansprüche 1 bis 5 in einer Steuereinheit für ein Fahrzeug.

## Claims

1. Polarity reversal protection arrangement having a transistor circuit (9), an amplifier circuit (5) and an output driver stage (7), wherein the amplifier circuit (5) is connected to the output driver stage (7) and the output driver stage (7) is connected to the transistor circuit (9) and the transistor circuit (9) is arranged between a first connection node (13) and a second connection node (15) of the polarity reversal protection arrangement (1), such that an electrical connection between the first connection node (13) and the second connection node (15) is able to be created or disconnected by way of the transistor circuit (9), wherein the output driver stage (7) is designed as a tri-state stage, **characterized in that** the amplifier circuit (5) is designed to implement a linear mode in which the transistor circuit (9) is driven such that it behaves like an ideal diode.

2. Polarity reversal protection arrangement according to Claim 1, **characterized in that** the polarity reversal protection arrangement (1) has a switch circuit (23) that is connected to the output driver stage (7), wherein the transistor circuit (9) is able to be driven by the amplifier circuit (5) and by the switch circuit (23).

3. Polarity reversal protection arrangement according to either of the preceding claims, **characterized in that** a node point (10) is arranged in the connection between the amplifier circuit (5) and the output driver stage (7) and the polarity reversal protection arrangement (1) has a resistor (3) that is connected to the node point (10) and to the first connection node (13).

4. Polarity reversal protection arrangement according to one of the preceding claims, **characterized in that** the transistor circuit (9) is designed as an N-MOS transistor and the polarity reversal protection arrangement (1) has a charge pump (11) that is connected to the output driver stage (7).

5. Polarity reversal protection arrangement according to one of Claims 2 to 4, **characterized in that** the polarity reversal protection arrangement (1) has a monitoring circuit (25) by way of which the transistor circuit (9), the amplifier circuit (5) and/or the switch circuit (23) may be monitored.

6. Method for operating a polarity reversal protection arrangement (1) according to one of Claims 2 to 5, **characterized in that** the following steps are performed:
- Driving the transistor circuit (9) by way of the output driver stage (7) based on signals from the amplifier circuit (5), wherein the amplifier circuit (5) is implemented in a linear mode so that the transistor circuit (9) is driven such that it behaves like an ideal diode and/or
- Driving the transistor circuit (9) based on signals from the switch circuit (23).

7. Operating method according to Claim 6, **characterized in that** the following step is performed:
- Driving the transistor circuit (9) based on a change between signals from the amplifier circuit (5) and signals from the switch circuit (23).

8. Operating method according to Claim 6 or 7, **characterized in that** the polarity reversal protection arrangement (1) has a monitoring circuit (25) and the following step is performed:
- Monitoring the transistor circuit (9), the amplifier circuit (5) and/or the switch circuit (23) by way of the monitoring circuit (25).

9. Use of a polarity reversal protection arrangement (1) according to one of Claims 1 to 5 in a control unit for a vehicle.

## Revendications

1. Ensemble de protection contre l'inversion de polarité, ledit ensemble comprenant un circuit à transistor (9), un circuit amplificateur (5) et un étage d'attaque de sortie (7), le circuit amplificateur (5) étant relié à l'étage d'attaque de sortie (7) et l'étage d'attaque de sortie (7) étant relié au circuit à transistor (9) et le circuit à transistor (9) étant disposé entre un premier nœud de raccordement (13) et un deuxième nœud de raccordement (15) de l'ensemble de protection contre l'inversion de polarité (1) de sorte qu'une liaison électrique entre le premier nœud de raccordement (13) et le deuxième nœud de raccordement (15) peut être réalisée ou supprimée au moyen du circuit à transistor (9), l'étage d'attaque de sortie (7) étant conçu comme un étage à trois états, **caractérisé en ce que** le circuit amplificateur (5) est conçu pour exécuter un mode linéaire dans lequel le circuit à transistor (9) est commandé de manière à qu'il se comporte comme une diode idéale.

2. Ensemble de protection contre l'inversion de polarité selon la revendication 1, **caractérisé en ce que** l'ensemble de protection contre l'inversion de polarité (1) comporte un circuit de commutation (23) qui est relié à l'étage d'attaque de sortie (7), le circuit à transistor (9) pouvant être commandé par le circuit amplificateur (5) et par le circuit de commutation (23).

3. Ensemble de protection contre l'inversion de polarité selon l'une des revendications précédentes, **caractérisé en ce qu'**un point nodal (10) est disposé dans la liaison entre le circuit amplificateur (5) et l'étage d'attaque de sortie (7) et l'ensemble de protection contre l'inversion de polarité (1) comporte une résistance (3) qui est reliée au point nodal (10) et au premier nœud de raccordement (13).

4. Ensemble de protection contre l'inversion de polarité selon l'une des revendications précédentes, **caractérisé en ce que** le circuit à transistor (9) est conçu comme un transistor N-MOS et l'ensemble de protection contre l'inversion de polarité (1) comporte une pompe de charge (11) qui est reliée à l'étage d'attaque de sortie (7).

5. Ensemble de protection contre l'inversion de polarité selon l'une des revendications 2 à 4, **caractérisé en ce que** l'ensemble de protection contre l'inversion de polarité (1) comporte un circuit de surveillance (25) permettant de surveiller le circuit à transistor (9), le circuit amplificateur (5) et/ou le circuit de commutation (23).

6. Procédé de fonctionnement d'un ensemble de protection contre l'inversion de polarité (1) selon l'une des revendications 2 à 5, **caractérisé en ce que** les étapes suivantes sont réalisées :
- attaquer le circuit à transistor (9) par le biais de l'étage d'attaque de sortie (7) sur la base de signaux du circuit amplificateur (5), le circuit amplificateur (5) étant mis en oeuvre dans un mode linéaire de sorte que le circuit à transistor (9) soit commandé de manière à ce qu'il se comporte comme une diode idéale et/ou
- attaquer le circuit à transistor (9) sur la base de signaux du circuit de commutation (23).

7. Procédé de fonctionnement selon la revendication 6, **caractérisé en ce que** l'étape suivante est réalisée :
- attaquer le circuit à transistor (9) sur la base d'un changement entre des signaux du circuit amplificateur (5) et des signaux du circuit de commutation (23).

8. Procédé de fonctionnement selon la revendication 6 ou 7, **caractérisé en ce que** l'ensemble de protection contre l'inversion de polarité (1) comporte un circuit de surveillance (25) et l'étape suivante est réalisée :
- surveiller le circuit à transistor (9), le circuit amplificateur (5) et/ou le circuit de commutation (23) au moyen du circuit de surveillance (25).

9. Utilisation d'un ensemble de protection contre l'inversion de polarité (1) selon l'une des revendications 1 à 5 dans une unité de commande d'un véhicule.
